# EUROPEAN PATENT APPLICATION

(11) **EP 4 614 527 A1**
(43) Date of publication of application: **10.09.2025**
(21) Application number: 25161368.3
(22) Date of filing: 03.03.2025
(51) Int. Cl.: H01B 7/00, H01B 7/04, H02G 3/04

(54) **ELECTRICAL CABLE FOR THE CONNECTION OF ELECTRIC/ELECTRONIC DEVICES, IN PARTICULAR ROAD VEHICLES**

(30) Priority: 04.03.2024 IT 202400004696
(71) Applicant: FERRARI S.p.A., 41100 Modena (IT)
(72) Inventor: SIANI, Aniello, 41100 Modena (IT); AGNELLO, Giuseppe, 41100 Modena (IT); BETRÒ, Roberto, 41100 Modena (IT); SITTA, UGO, 41100 Modena (IT)
(74) Representative: Studio Torta S.p.A.

(57) **Abstract**

An electrical cable for the connection of two electric/electronic devices (2, 3), in particular road vehicles, is defined by at least one electrical conductor (11; 22) inserted in a protective sheath (10; 21) made of an insulating material having two sheath portions (13, 14; 24, 25), which define, together with the segments (11; 22) of electrical conductor associated thereto, relative segments (15, 16; 26, 27) of electrical cable (8; 20), and are separated from one another so as to enable the two segments (15, 16; 26, 27) of electrical cable (8; 20) to rotate with one another about a longitudinal axis (17; 28) of the electrical cable (8; 20).

## Description

### CROSS-REFERENCE TO RELATED PATENT APPLICATIONS

This patent application claims priority from Italian patent application no. 102024000004696 filed on March 4, 2024, the entire disclosure of which is incorporated herein by reference.

### TECHNICAL FIELD

The present invention relates to an electrical cable for the connection of electric/electronic devices, in particular road vehicles.

### BACKGROUND

In the field of road vehicles, it is known to provide an electrical cable to connect a first electric/electronic device, e.g. a battery pack, and a second electric/electronic device, e.g. a charging socket, to one another.

Generally, the electrical cable comprises at least one electrical conductor and a protection sheath made of insulating material fitted around the electrical conductor.

Known electrical cables of the type described above have certain disadvantages mainly resulting from the fact that these electrical cables only allow to connect fixed electric/electronic devices to one another and are unable to connect mobile electric/electronic devices to one another such as, for example, a battery pack and a charging drum provided with a plurality of charging sockets and movable so as to allow the selective connection of the charging sockets with a source of electrical energy external to the road vehicle.

### SUMMARY

The object of the present invention is to provide an electrical cable for the connection of electric/electronic devices, in particular road vehicles, which is free from the above-mentioned drawbacks and which is of simple and cost-effective production.

According to the present invention, there is provided an electrical cable for the connection of electric/electronic devices, in particular road vehicles, as claimed in claims 1 to 6.

The present invention further relates to an electrical connection system for electric/electronic devices, in particular road vehicles.

According to the present invention, there is provided an electrical connection system for electric/electronic devices, in particular road vehicles, as claimed in claims 7 to 10.

### BRIEF DESCRIPTION OF THE DRAWINGS

The present invention will now be described with reference to the attached drawings, which show a nonlimiting embodiment thereof, wherein:
Figure 1 is a schematic perspective view, with parts removed for clarity, of a preferred embodiment of the electrical cable of the present invention implemented in an electrical connection system for electric/electronic devices;
Figure 2 is an exploded schematic perspective view, with parts removed for clarity, of the electrical connection system in Figure 1;
Figure 3 is a schematic perspective view of the electrical cable in Figures 1 and 2;
Figure 4 is a schematic perspective view of a first variant of the electrical cable in Figure 1; and
Figure 5 is a schematic perspective view of a second variant of the electrical cable in Figure 1.

### DESCRIPTION OF EMBODIMENTS

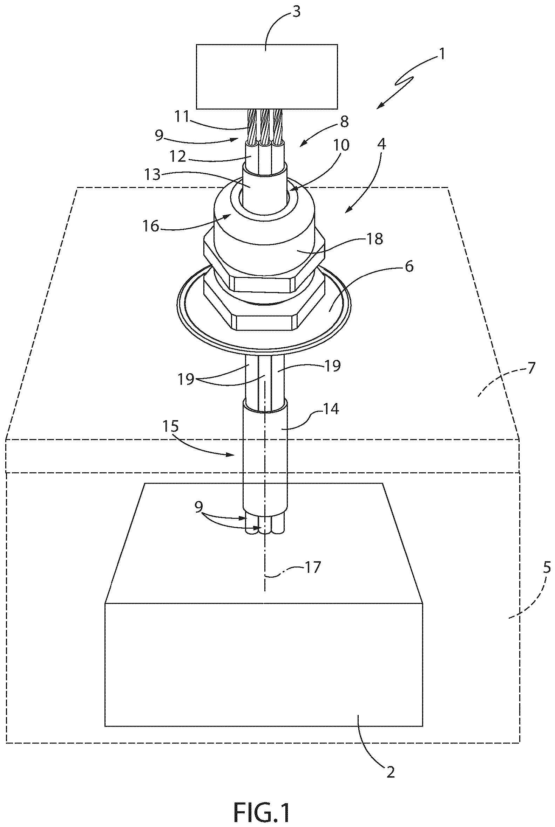

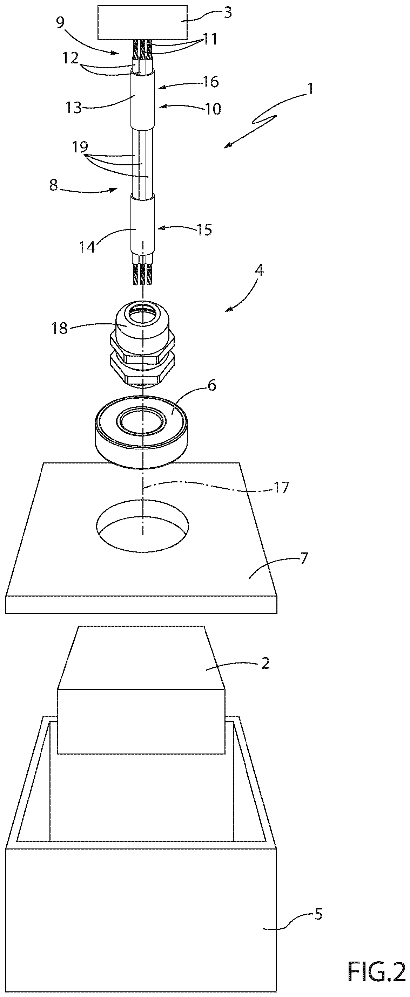

With reference to Figures 1 and 2, 1 denotes, as a whole, an electrical connection system comprising two electric/electronic devices 2, 3 and a connection device 4 to connect devices 2, 3 to one another.

For example, the device 3 is a battery pack for powering an electric motor of an electric or hybrid road vehicle, and the device 2 is a charging drum, which is provided with a plurality of charging sockets, and is movable to allow the selective connection of the charging sockets with a source of electrical energy external to the road vehicle.

The system 1 further comprises a container 5 to accommodate the device 2 therein, and a rolling bearing 6 mounted through a wall 7 of the container 5.

Obviously, according to a variant not shown, the device 3 is fixed and the assembly defined by the device 2 and the container 5 is movable relative to the device 3.

The connection device 4 comprises an electrical cable 8 comprising, in turn, in this case, a plurality of conductor wires 9, in this case three wires 9, and an outer protection sheath 10 made of insulating material fixed around the wires 9.

According to a variant not shown, the cable 8 is a shielded cable with a metal element arranged between the wires 9 and the sheath 10.

According to a further variant not shown, the wires 9 are covered with a layer of highly elastic insulating material.

Each wire 9 comprises an electrical conductor 11 and an outer protection sheath 12 made of insulating material fixed around the conductor 11.

The sheath 10 comprises two sheath portions 13, 14, which define, together with the segments 9 of the wires associated with the portions 13, 14, relative segments 15, 16 of cable 8, and are separated from one another so as to allow the two segments 15, 16 of cable 8 to rotate relative to one another around a longitudinal axis 17 of the cable 8.

The segment 15 extends inside the container 5 and is connected with the device 2; the segment 16 extends substantially outside the container 5 and is connected with the device 3; and the sheath portion 13 is coupled in an angularly fixed manner to an inner track of the bearing 6 through the interposition of a cable gland 18 mounted through the bearing 6.

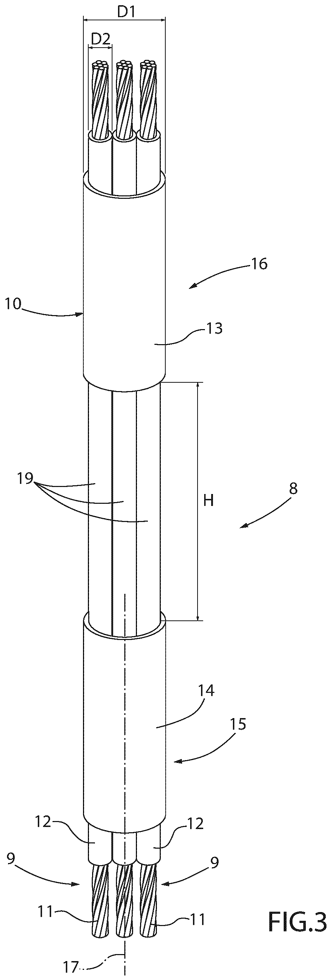

With regard to what set forth above, it should be noted that:
the wires 9 comprise a free portion 19, which extends between the two portions 13, 14, and is substantially accommodated inside the container 5; and
the portions 13, 14 are arranged at a distance H from each other, measured parallel to the axis 17, which is greater than an outer diameter D1 of the sheath 10 and than an outer diameter D2 of each sheath 12 (Figure 3).

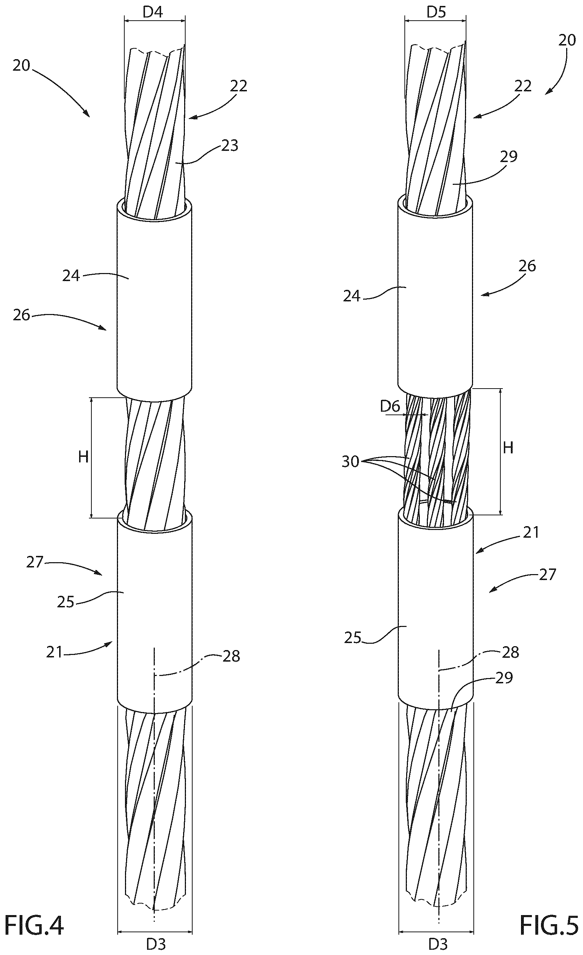

The variant shown in Figure 4 differs from what shown in the previous figures only in that, in it, the electrical cable 8 is eliminated and replaced with an electrical cable 20 comprising an outer protection sheath 21 made of insulating material attached around an electrical conductor 22 defined by a single bundle 23 of metal wires extending through the sheath 21 itself.

The sheath 21 comprises two sheath portions 24, 25, which define, together with the segments of conductor 22 that are associated with the portions 24, 25, relative segments 26, 27 of cable 20, and are separated from one another so as to allow the two segments 26, 27 of cable 20 to rotate relative to one another around a longitudinal axis 28 of the cable 20 itself.

The portions 24, 25 are arranged at a distance H greater than an outer diameter D3 of the sheath 21 and than a diameter D4 of the conductor 22.

The variant shown in Figure 5 differs from what shown in Figure 4 only in that, in it, the conductor 22 comprises a plurality of metal wires grouped in a single bundle 29 at each sheath portion 24, 25 and in at least two bundles 30 (in this case three bundles 30) between the two sheath portions 24, 25.

The distance H between the portions 24, 25 is greater than the outer diameter D3 of the sheath 21, than a diameter D5 of the bundle 29, and than a diameter D6 of each bundle 30.

The electrical connection system 1 has certain advantages mainly resulting from the fact that the electrical cables 8, 20 allow to connect electric/electronic devices 2, 3 movable relative to one another.

## Claims

1. An electrical cable for the connection of electric/electronic devices (2, 3), in particular road vehicles, the electrical cable comprising at least one electrical conductor (11; 22) to electrically connect a first electric/electronic device (2) and a second electric/electronic device (3) to one another; and a first protection sheath (10; 21) made of an insulating material and fixed around the electrical conductor (11; 22); and **characterized in that** the first protection sheath (10; 21) comprises two sheath portions (13, 14; 24, 25), which define, together with the segments of electrical conductor (11; 22) associated with the sheath portions (13, 14; 24, 25), relative segments (15, 16; 26, 27) of electrical cable (8; 20) and are separate from one another so as to allow the two segments (15, 16; 26, 27) of electrical cable (8; 20) to rotate relative to one another around a longitudinal axis (17; 28) of the electrical cable (8; 20).

2. The electrical cable according to claim 1, wherein the two sheath portions (13, 14; 24, 25) are arranged at a distance (H) from one another that is greater than an outer diameter (D1; D3) of the first protection sheath (10; 21) and than a diameter (D2; D4) of each electrical conductor (11; 22).

3. The electrical cable according to claim 1 or 2, wherein the electrical conductor (22) comprises on single bundle (23) of metal wires extending through the entire first protection sheath (21).

4. The electrical cable according to claim 1 or 2, wherein the electrical conductor (22) comprises a plurality of metal wires grouped in one single bundle (29) in the area of each sheath portion (24, 25) and in at least two bundles (30) between the two sheath portions (24, 25).

5. The electrical cable according to claim 1 or 2 and comprising at least two conductor wires (9), each comprising, in turn, an electrical conductor (11) and a second protection sheath (12) made of an insulating material and fixed around the electrical conductor (11); the conductor wires (9) extending through the first protection sheath (10).

6. The electrical cable according to claim 5, wherein the two sheath portions (13, 14) are arranged at a distance (H) from one another that is greater than an outer diameter (D1) of the first protection sheath (10) and than a diameter (D2) of each conductor wire (9).

7. The electrical connection system for electric/electronic devices (2, 3), in particular road vehicles, the electrical connection system comprising a first electric/electronic device (2); a second electric/electronic device (3); and an electrical cable (8; 20) made according to any one of claims 1 to 6 for electrically connecting said first and second electric/electronic devices (2, 3) to one other.

8. The electrical connection system according to claim 7 and further comprising a container (5) to accommodate, on the inside, the first electric/electronic device (2) and a rolling bearing (6) fitted through a wall (7) of the container (5); a first segment (15; 27) of electrical cable (8; 20) being fixed to the first electric/electronic device (2) and a second segment (16; 26) of electrical cable (8; 20) being fixed to the second electric/electronic device (3) and to the rolling bearing (6) so as to rotate relative to the first segment (15; 27) of electrical cable (8; 20) around said longitudinal axis (17; 28).

9. The electrical connection system according to claim 8, wherein the second segment (16; 26) of electrical cable (8; 20) is fixed to the rolling bearing (6) through the interposition of a cable gland (18).

10. The electrical connection system according to claim 8 or 9, wherein the electrical conductor portion (11; 22) arranged between the two sheath portions (13, 14; 24, 25) extends inside the container (5).
